# EUROPEAN PATENT APPLICATION

(11) **EP 4 311 299 A1**
(43) Date of publication of application: **24.01.2024**
(21) Application number: 22783989.1
(22) Date of filing: 02.04.2022
(51) Int. Cl.: H04W 28/06

(54) **TRANSMISSION PROCESSING METHOD AND APPARATUS, AND COMMUNICATION DEVICE**

(30) Priority: 06.04.2021 CN 202110368458
(71) Applicant: Vivo Mobile Communication Co., Ltd., Dongguan, Guangdong 523863 (CN)
(72) Inventor: ZENG, Chaojun, Dongguan, Guangdong 523863 (CN); SUN, Xiaodong, Dongguan, Guangdong 523863 (CN); CHEN, Xiaohang, Dongguan, Guangdong 523863 (CN); LI, Dongru, Dongguan, Guangdong 523863 (CN); JIANG, Wei, Dongguan, Guangdong 523863 (CN); YOU, Huazheng, Dongguan, Guangdong 523863 (CN); JI, Zichao, Dongguan, Guangdong 523863 (CN)
(74) Representative: Murgitroyd & Company
(86) International application number: PCT/CN2022/085039
(87) International publication number: WO 2022/213923

(57) **Abstract**

This application relates to the technical field of communications. Disclosed are a transmission processing method and apparatus, and a communications device. The transmission processing method of embodiments of this application includes: a first communications device sending transmission assistance information of first data, where the transmission assistance information is used for assisting a second communications device to execute transmission processing of the first data; or discarding the first data according to transmission configuration information.

## Description

### CROSS-REFERENCE TO RELATED APPLICATION

This application claims the priority of Chinese Patent Application No. 202110368458.2 filed in China on April 6, 2021, the entirety of which is incorporated herein by reference.

### TECHNICAL FIELD

This application belongs to the technical field of communication, and in particular, to a transmission processing method and apparatus, and a communications device.

### BACKGROUND

Extended reality (eXtended Reality, XR) refers to all real-and-virtual combined environments and human-machine interactions generated by computer technologies and wearable devices. The extended reality (eXtended Reality, XR) includes representative forms of augmented reality (Augmented Reality, AR), mixed reality (Mixed Reality, MR), virtual reality (VR), etc., and crossing fields there between. The level of a virtual world ranges from partial sensory input to full immersion in virtual reality. A key aspect of XR is extension of human experience, especially experience relating to a sense of existence (represented by VR) and acquisition of cognition (represented by AR).

For VR service, an uplink is dominated by transmission of relatively dense small data packets that may carry information such as gestures, controls, etc. as inputs and references for downlink data presentation. A downlink is dominated by transmission of multimedia data such as videos, audio, etc., and through timely reception and presentation of such multimedia data, a sense of immersion is provided to a user. Taking downlink video data as an example, data packets arrive periodically or quasi-periodically. A data rate may reach tens or even hundreds of Mbps. A typical value of frames per second (FPS) is 60 or 120. An interval between the adjacent data packets is roughly 1/FPS. Such data generally needs to be successfully transmitted within 10 ms at a radio, and a transmission success rate is required to be no less than 99% or even 99.9%.

For AR service, in addition to the above-mentioned transmission of the dense small data packets, an uplink may also transmit the multimedia data such as the videos, the audio, etc. The uplink has similar service characteristics to a downlink. Usually, the data rate is relatively low, for example, tens of Mbps at most. A time limit of transmission at the radio may also be relaxed, and for example, such data generally needs to be successfully transmitted within 60 ms. The downlink has substantially consistent data transmission characteristics with the VR service.

As can be seen, XR service brings a great challenge for data transmission at the radio because of its particularly large data volume and high transmission requirements. How to use limited radio resources to efficiently transmit the XR service data to better meet service demands and increase service capacity is a difficult problem to be solved and continuously optimized.

### SUMMARY

Provided in embodiments of this application are a transmission processing method and apparatus, and a communications device. Efficient data transmission may be realized.

In a first aspect, provided is a transmission processing method, including:
sending, by a first communications device, transmission assistance information of first data, the transmission assistance information being used for assisting a second communications device to execute transmission processing of the first data; or
discarding the first data according to transmission configuration information.

In a second aspect, provided is a transmission processing apparatus, including:
a transmission processing module, configured to send transmission assistance information of first data, the transmission assistance information being used for assisting a second communications device to execute transmission processing of the first data; or
discard the first data according to transmission configuration information.

In a third aspect, provided is a transmission processing method, including:
receiving, by a second communications device, transmission assistance information of first data; and
executing, by the second communications device, transmission processing of the first data according to the transmission assistance information.

In a fourth aspect, provided is a transmission processing apparatus, including:
a receiving module, configured to receive transmission assistance information of first data; and
a processing module, configured to execute transmission processing of the first data according to the transmission assistance information.

In a fifth aspect, provided is a first communications device, including a processor, a memory, and a program or an instruction stored in the memory and executable on the processor, where when the program or the instruction is executed by the processor, steps of the method according to the first aspect are implemented.

In a sixth aspect, provided is a communications device, including a processor and a communications interface, the communications interface being configured to send transmission assistance information of first data, and the transmission assistance information being used for assisting a second communications device to execute transmission processing of the first data; and the processor being configured to discard the first data according to transmission configuration information.

In a seventh aspect, provided is a second communications device, including a processor, a memory, and a program or an instruction stored in the memory and executable on the processor, where when the program or the instruction is executed by the processor, steps of the method according to the third aspect are implemented.

In an eighth aspect, provided is a communications device, including a processor and a communications interface, the communications interface being configured to receive transmission assistance information of first data; and the processor being configured to execute transmission processing of the first data according to the transmission assistance information.

In a ninth aspect, provided is a readable storage medium, storing a program or an instruction, where when the program or the instruction is executed by a processor, steps of the method according to the first aspect are implemented, or steps of the method according to the third aspect are implemented.

In a tenth aspect, provided is a chip, including a processor and a communications interface, the communications interface being coupled to the processor, and the processor being configured to execute a program or an instruction to implement steps of the method according to the first aspect, or implement steps of the method according to the third aspect.

In an eleventh aspect, provided is a computer program/program product, stored in a storage medium, the computer program/program product being executed by at least one processor to implement steps of the method according to the first aspect, or implement steps of the method according to the third aspect.

In a twelfth aspect, provided is a communications device, configured to execute steps of the method according to the first aspect, or configured to execute steps of the method according to the third aspect.

In the embodiments of this application, a first communications device may send transmission assistance information of first data, so that after acquiring the transmission assistance information, a second communications device timely synchronizes related information of the first data and executes corresponding transmission processing. Alternatively, the first communications device may voluntarily discard all or part of the first data according to transmission configuration information. Here, the first data may be understood as data that needs to be transmitted from the first communications device to the second communications device. As such, through timely transmission processing by the second communications device or autonomous packet discarding by the first communications device, more efficient data transmission is realized.

### BRIEF DESCRIPTION OF THE DRAWINGS

FIG. 1 is a block diagram of a wireless communications system.
FIG. 2 is one of the schematic flowchart of a transmission processing method according to an embodiment of this application.
FIG. 3 is a structural diagram of an apparatus corresponding to FIG. 2.
FIG. 4 is the other schematic flowchart of a transmission processing method according to an embodiment of this application.
FIG. 5 is a structural diagram of an apparatus corresponding to FIG. 4.
FIG. 6 is a structural diagram of a communications device according to an embodiment of this application.
FIG. 7 is a structural diagram of a terminal according to an embodiment of this application.
FIG. 8 is a structural diagram of a network-side device according to an embodiment of this application.

### DETAILED DESCRIPTION

Technical solutions in embodiments of this application will be clearly described below in conjunction with accompanying drawings in the embodiments of this application. Apparently, the described embodiments are merely some rather than all of the embodiments of this application. All other embodiments obtained by those of ordinary skill in the art based on the embodiments of this application fall within the protection scope of this application.

In the description and claims of this application, terms "first", "second", etc. are used for distinguishing similar objects, instead of describing a specific order or sequence. It is to be understood that the terms used in this way are exchangeable in a proper case, so that the embodiments of this application may be implemented in an order other than those shown or described herein, and that the objects distinguished by "first" and "second" are usually of the same category, the number of the objects is not limited, and for example, there may be one or more first objects. In addition, in the description and the claims, "and/or" represents at least one of the connected objects, and the character "/" generally represents that the front and back associated objects have an "or" relationship.

It is worth pointing out that a technology described in the embodiments of this application is not limited to a long term evolution (Long Term Evolution, LTE)/LTE-advanced (LTE-A) system, or may be applied to other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. In the embodiments of this application, terms "system" and "network" are often used interchangeably. The described technology may be applied to the above-mentioned systems and radio technologies, and may also be applied to other systems and radio technologies. The following describes a new radio (New Radio, NR) system for an exemplary purpose, and the term "NR" is used in most of the descriptions below. However, these technologies may also be applied to applications other than NR system applications, such as a 6th generation (6th Generation, 6G) communications system.

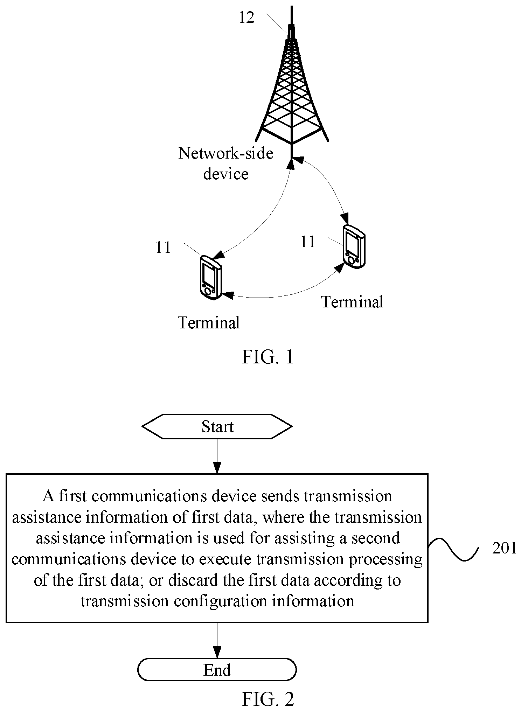

FIG. 1 is a block diagram of a wireless communications system applicable to an embodiment of this application. The wireless communications system includes a terminal 11 and a network-side device 12. The terminal 11 may also be referred to as a terminal device or a user terminal (User Equipment, UE). The terminal 11 may be a mobile phone, a tablet personal computer (Tablet Personal Computer), a laptop computer (Laptop Computer) (or referred to as a notebook computer), a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device), an on-vehicle device (VUE), a pedestrian terminal (PUE), or other terminal-side devices. The wearable device includes: a smart watch, a wristband, earphones, glasses, etc. A specific type of the terminal 11 is not limited to the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a B-node, an evolved B-node (eNB), a home B-node, a home evolved B-node, a wireless local area network (Wireless Local Area Network, WLAN) access point, a Wi-Fi node, a transmitting receiving point (Transmitting Receiving Point, TRP) or some other appropriate terms in the field. Provided that the same technical effects are achieved, the base station is not limited to a specific technical term. In the embodiments of this application, only a base station in an NR system is taken as an example, but a specific type of the base station is not limited.

It is to be known that in order to facilitate the network-side device to execute uplink scheduling based on uplink data-to-be-transmitted, starting from LTE, a buffer status report (Buffer Status Report, BSR) reporting mechanism is introduced, in which the terminal reports an uplink data volume-to-be-transmitted corresponding to each logical channel to the base station. The mechanism is substantially followed in NR.

BSR reporting granularity is logical channel groups (Logical Channel Group, LCG). Each established logical channel may be configured with a logical channel group to which it belongs. It is supported in NR that at most eight logical channel groups are simultaneously configured for a single terminal.

ABSR is triggered based on the following events.

New uplink data-to-be-transmitted arrives in a certain logical channel of a certain logical channel group, and the logical channel has a higher priority than previous logical channels having uplink data-to-be-transmitted, or before the new data arrives, none of the logical channels have uplink data-to-be-transmitted. At this time, a Regular BSR will be triggered.

In a case that a certain uplink new transmission transport block (Transport Block, TB) is organized, a padding (Padding) bit number in the new transmission TB is greater than or equal to a bit number occupied by a single BSR Media Access Control control element (Media Access Control Control Element, MAC CE) and a Subheader corresponding thereto (that is, Padding bits in the new transmission TB may further accommodate bits corresponding to the single BSR MAC CE). At this time, A Padding BSR will be triggered.

A retransmission timer (retxBSR-Timer) times out, and uplink data-to-be-transmitted exists in at least one logical channel. At this time, the Regular BSR will be triggered.

A periodic timer (periodicBSR-Timer) times out. At this time, a Periodic BSR will be triggered.

In a case that the Regular BSR is triggered and there is no uplink resource for new transmission, the terminal will trigger a scheduling request (Scheduling Request, SR) for transmission or random access through a physical uplink control channel (Physical Uplink Control Channel, PUCCH) to request an uplink new transmission resource from the network-side device.

In a case that the Periodic BSR is triggered, the terminal contains a BSR MAC CE in the constructed uplink TB only in a case that the uplink new transmission resource exists, but does not actively request the uplink new transmission resource from a network by triggering the SR.

In a case that the Padding BSR is triggered, the terminal will directly contain a BSR MAC CE in the uplink new transmission TB.

The transmission processing method provided by the embodiments of this application is illustrated in detail below in conjunction with the accompanying drawings and with reference to some embodiments and application scenarios thereof.

As shown in FIG. 2, the transmission processing method according to an embodiment of this application includes the following steps:
step 201, send, by a first communications device, transmission assistance information of first data, the transmission assistance information being used for assisting a second communications device to execute transmission processing of the first data; or
discard the first data according to transmission configuration information.

Here, the first data is the first data in a buffer, or the first data that has been determined to be transmitted, that is, data-to-be-transmitted.

According to the above-mentioned step, the first communications device may send the transmission assistance information of the first data, so that after acquiring the transmission assistance information, the second communications device timely synchronizes related information of the first data and executes corresponding transmission processing; or the first communications device may voluntarily discard all or part of the first data according to the transmission configuration information. As such, through timely transmission processing by the second communications device or autonomous packet discarding by the first communications device, more efficient data transmission is realized.

Here, the first data is data to be sent from the first communications device to the second communications device. The first communications device may be a terminal, and the second communications device may be a network-side device. At this time, the first data is uplink data. Certainly, the first communications device and the second communications device may also be peer nodes in a communication process. For example, both the first communications device and the second communications device are terminals, and at this time, the first data is direct communication link data.

Optionally, the first data is data corresponding to a first logical channel or logical channel group.

The first logical channel or logical channel group may be a designated logical channel or logical channel group. The first logical channel or logical channel group may be one logical channel or logical channel group, or multiple logical channels or logical channel groups, the determination of which may be specified by a protocol, or configured by high-level signaling, or indicated by dynamic signaling. In the embodiment, a subsequent target logical channel or logical channel group (the designated logical channel or logical channel group) is the first logical channel or logical channel group, or one or more logical channels or logical channel groups among the first logical channel or logical channel group.

Optionally, in the embodiment, the first data is grouped based on at least one of the following parameters:
logical channels or logical channel groups;
arrival time intervals between data;
time threshold values;
a number of groups; and
data packets.

Here, grouping of the first data may also be understood as the granularity or range of each group of data.

The logical channels or logical channel groups are used as a grouping parameter. Data-to-be-transmitted corresponding to a single logical channel or logical channel group may be regarded as a group of data. Certainly, data-to-be-transmitted corresponding to multiple logical channels or logical channel groups may also be regarded as a group of data.

The arrival time intervals between data are used as a grouping parameter. Specifically, according to an interval threshold, data with arrival time intervals there between not exceeding the interval threshold is regarded as a group of data. For example, one or more data packets whose moment of arrival of designated logical channels or logical channel groups at the radio buffer is relatively close, or whose moment of determination of requiring transmission is relatively close are classified as the same group of data. Assuming that a time interval between Packet i and Packet i+1 does not exceed the interval threshold and a time interval between Packet i+1 and Packet i+2 exceeds the interval threshold, Packet i and Packet i+1 may be classified as the same group of data, and Packet i+2 belongs to another group of data. Here, the interval threshold may be predefined, or configured by high-level signaling, or indicated by dynamic signaling.

The time threshold values are used as a grouping parameter. That is, data packets arriving within each designated duration belong to the same group of data. At this time, a time range in which data-to-be-transmitted exists may be divided into one or more time periods according to the time threshold values, and the data packets arriving within each time period belong to the same group of data. Herein, a start moment of the time range of the data-to-be-transmitted may be an arrival moment of earliest data-to-be-transmitted in a designated logical channel or logical channel group, and an end moment may be a moment of triggering reporting or actual reporting of the information. The time threshold values may be predefined, or configured by high-level signaling, or indicated by dynamic signaling. The number of groups of the first data may be determined through ceiling (a duration/time threshold value corresponding to the time range of the data-to-be-transmitted). Here, ceiling () is an operation of rounding up to an integer. Specifically, a start moment of a time period corresponding to a first group of data is aligned with a start moment of the time range of the data-to-be-transmitted, or an end moment of a time period corresponding to a last group of data is aligned with an end moment of the time range of the data-to-be-transmitted.

The number of groups N is used as a grouping parameter. That is, the time range in which the data-to-be-transmitted exists is divided into N time periods, and data packets arriving within each time period belong to the same group of data. Here, during grouping, the time range of the data-to-be-transmitted may be equally divided into the N time periods. Certainly, after the N time periods are divided, in a case that a length of each time period is less than a preset value, the preset value may further be re-used as a time threshold value, and grouping is performed again through the method of using the time threshold values as the grouping parameter, which will not be described in detail herein. A value of N may be predefined, or configured by high-level signaling, or indicated by dynamic signaling.

The data packets are used as a grouping parameter. That is, each data packet serves as a group of data. Here, the data packets may only contain service data packets from a high level of the radio, such as a packet data convergence protocol (Packet Data Convergence Protocol, PDCP) service data unit (Service Data Unit, SDU), or a radio link control (Radio Link Control, RLC) SDU. In addition, in addition to the service data packets, the data packets may also contain control data packets generated by the radio itself, such as a status report protocol data unit (Protocol Data Unit, PDU) generated by PDCP and RLC, etc.

The grouping parameter is predefined, or configured by high-level signaling, or indicated by dynamic signaling.

Optionally, based on self-judgment, the first communications device may also select a suitable grouping parameter from available grouping parameters or grouping parameter subsets pre-configured by the second communications device as the grouping parameter.

After the first data is grouped, the transmission assistance information sent by the first communications device may correspond to each group of data. Therefore, optionally, step 201 includes:
sending, by the first communications device, first information of each group of data among at least one group of data.

Here, the at least one group of data is all or part of data groups for a target logical channel or logical channel group. In other words, the first communications device may report first information of all or part of the data groups corresponding to the target logical channel or logical channel group.

Optionally, the first information includes at least one of the following:
a data volume-to-be-transmitted;
transmission waiting time;
transmission arrival time;
transmission timeout time;
transmission remaining time;
an association relationship with other data groups among the at least one group of data; and
grouping parameters.

The data volume-to-be-transmitted is an accumulated value of sizes of all the data packets in a data group (a current data group) corresponding thereto. Optionally, in a case that the data volume-to-be-transmitted is determined, a protocol header overhead of each layer of the radio may further be considered or not considered.

The transmission arrival time is a moment when data arrives at the buffer, or a moment when it is determined that the data needs to be transmitted. The transmission waiting time is determined by using the transmission arrival time of the data as a start time and using a moment of triggering reporting or actual reporting of the transmission assistance information as a cut-off time.

The transmission timeout time may be transmission timeout time corresponding to a designated data packet in the current data group. For example, here, the designated data packet may be an earliest data packet (for example, a data packet with earliest transmission arrival time) corresponding to the current data group. Here, the transmission timeout time may be determined based on a packet delay budget (Packet Delay Budget, PDB), or a discard timer (Discard Timer) of a PDCP layer, and transmission arrival time of a data packet.

The transmission remaining time may be transmission remaining time corresponding to a designated data packet in the current data group. For example, here, the designated data packet may be an earliest data packet (for example, a data packet with earliest transmission arrival time) corresponding to the current data group. The transmission remaining time of a certain data packet may be understood as a time length that the data packet may still be transmitted before the data packet times out, and may be determined based on a current moment and transmission timeout time of the data packet. Here, the current moment may be understood as a moment of triggering reporting or actual reporting of the transmission assistance information.

Optionally, the transmission waiting time includes at least one of the following:
transmission waiting time of a target data packet corresponding to a current data group;
average transmission waiting time of at least two data packets corresponding to the current data group;
a transmission waiting time variance of the at least two data packets corresponding to the current data group;
a transmission waiting time standard deviation of the at least two data packets corresponding to the current data group; and
a transmission waiting time fluctuation range of the at least two data packets corresponding to the current data group range.

Here, the target data packet may be a data packet in the current data group, such as an earliest data packet (the earliest one to arrive at the buffer, or the earliest one to determine requiring transmission), or a latest data packet (the latest one to arrive at the buffer, or the latest one to determine requiring transmission), or the like. The at least two data packets may be determined in the current data group based on a preset rule, such as the first M data packets in the current data group, where M is a positive integer greater than 1, which may be predefined, or configured by high-level signaling, or indicated by dynamic signaling. Certainly, M may also be the number of all data packets in the current data group.

The average transmission waiting time of the at least two data packets corresponding to the current data group may be obtained by finding a linear average value of transmission waiting time of the at least two data packets, or obtained by setting a weight for the transmission waiting time of the at least two data packets and finding a linear weighted average value, for example, *Weighted_Average_Time* = (Σ*ᵢ Packet_Sizeᵢ* * *Timeᵢ*) /(Σ*ᵢ Packet_Sizeᵢ*)where*Packet*_*Sizeᵢ*is a size or bit number of an i<th> data packet/a byte number (as the weight value),*Timeᵢ*is transmission waiting time of the i<th> data packet.

The transmission waiting time fluctuation range of the at least two data packets is calculated by subtracting the minimum transmission waiting time from the maximum transmission waiting time of the at least two data packets.

Optionally, the transmission arrival time includes at least one of the following:
transmission arrival time of a target data packet corresponding to a current data group;
average transmission arrival time of at least two data packets corresponding to the current data group;
a transmission arrival time variance of the at least two data packets corresponding to the current data group;
a transmission arrival time standard deviation of the at least two data packets corresponding to the current data group; and
a transmission arrival time fluctuation range of the at least two data packets corresponding to the current data group range.

Here, for a method of determining the transmission arrival time, reference may be made to the above-mentioned transmission waiting time, which will not be described in detail herein.

In the embodiment, the transmission timeout time of the target data packet (for example, the earliest data packet) may be adopted as transmission timeout time of the data group. The transmission remaining time of the target data packet (for example, the earliest data packet) may also be adopted as transmission remaining time of the data group. Certainly, an average value, a variance, a standard deviation or a fluctuation range of the at least two data packets of the group of data may also be adopted as the transmission timeout time and the transmission remaining time of the data group.

Optionally, the association relationship with the other data groups among the at least one group of data includes at least one of the following:
identical processing;
transmission substitution; and
synchronization requirement.

Here, identical processing means that the current data group needs to be processed identically to the other data groups. Transmission substitution means that there is a substitution relationship between the current data group and the other data groups, and such substitution relationship may be unidirectional or bidirectional. Synchronization requirement means that there is synchronization requirement between the current data group and the other data groups, and it needs to be ensured that time differences between transmission time of the data groups do not exceed a preset threshold.

Assuming that in a case that the association relationship between data group 1 and data group 2 is identical processing, both data group 1 and data group 2 are either transmitted or discarded. In a case that the association relationship between data group 1 and data group 2 is transmission substitution, and the transmission substitution is only unidirectional, that is, data group 2 may no longer be transmitted after data group 1 is transmitted, but data group 1 still needs to be transmitted after data group 2 is transmitted. In a case that the association relationship between data group 1 and data group 2 is the synchronization requirement, data group 1 needs to begin transmission or complete transmission within K time units after data group 2 begins transmission or completes transmission. K may be specified by a protocol, or configured by high-level signaling, or indicated by dynamic signaling.

The other data groups and the current data group may belong to the same logical channel or logical channel group (that is, the association relationship in the logical channel or logical channel group), and may also belong to different logical channels or logical channel groups (that is, the association relationship between the logical channels or logical channel groups). Certainly, the other data groups may include zero, one or more data groups.

In addition, in addition to the above-mentioned content, the first information of each group of data may further include a serial number or index of the group of data. Certainly, the serial number or index of each group of data may be implicitly reflected in signaling that sends the first information.

In addition, after the first data is grouped, the transmission assistance information sent by the first communications device may be statistical information corresponding to the multiple groups of data. Thus, optionally, step 201 includes:
sending, by the first communications device, statistical information of the at least one group of data.

Optionally, the statistical information includes at least one of the following:
data volume statistical information; and
time statistical information.

Certainly, the first communications device may not only send the first information of each group of data among the at least one group of data, but also send the statistical information of the at least one group of data; or the first communications device only sends one of the two.

Here, the data volume statistical information refers to statistical information of the data groups for the target logical channel or logical channel group in a data volume dimension. Specifically, the data volume statistical information may include an average value, a variance/a standard deviation, a maximum value/a minimum value, a difference value between the maximum value and the minimum value, etc. of a data volume of the at least one group of data. For example, in a case that the at least one group of data is only one group of data, corresponding data volume statistical information is a size of the data volume in data packets in the group of data. In a case that the at least one group of data is multiple groups of data, corresponding data volume statistical information is a sum of sizes of data volumes in data packets in the multiple groups of data.

The time statistical information refers to statistical information of the data groups for the target logical channel or logical channel group in a time dimension.

Optionally, the time statistical information includes at least one of the following:
statistical information of transmission waiting time;
statistical information of transmission remaining time;
an arrival period;
an arrival offset; and
arrival time jitter information.

Here, the statistical information of the transmission waiting time may include an average value, a variance, a standard deviation, a maximum value, a minimum value, a difference value between the maximum value and the minimum value, etc. of transmission waiting time of the at least one group of data. The statistical information of the transmission remaining time may include an average value, a variance, a standard deviation, a maximum value, a minimum value, a difference value between the maximum value and the minimum value, etc. of transmission remaining time of the at least one group of data. The arrival time jitter information includes whether jitter exists, statistical characteristics of jitter, etc. For example, in a case that it is determined that jitter exists, whether jitter conforms to preset statistical distribution and statistical parameter values, and the like, in a case of conforming to the preset statistical distribution are judged and sent.

In addition, in the embodiment, for a sending timing of the transmission assistance information, optionally, step 201 includes one of the following:
sending, by the first communications device, the transmission assistance information based on a preset period;
after receiving, by the first communications device, a transmission indication sent by the second communications device, sending the transmission assistance information according to the transmission indication;
based on a preset rule, sending, by the first communications device, the transmission assistance information under a condition of meeting the preset rule; and
based on a trigger of a buffer status report (BSR), sending, by the first communications device, the transmission assistance information in a case of the trigger.

As such, periodic reporting, triggering reporting of the second communications device, triggering reporting of the preset rule, triggering reporting of the BSR, etc. may be adopted as a method of the first communications device sending the transmission assistance information of the first data.

The preset period is a sending period of the transmission assistance information that is predefined, or configured by high-level signaling, or indicated by dynamic signaling. As such, the first communications device may periodically send the transmission assistance information based on the preset period.

A transmission indication for triggering sending of the transmission assistance information may be a MAC CE or downlink control information (Downlink Control Information, DCI). Certainly, based on the transmission indication, the first communications device may report only once, or periodically report according to a set period, or report X times according to the set period. Here, the set period may be the same as or different from the preset period. The set period and X may be predefined, or configured by high-level signaling, or indicated by dynamic signaling.

The preset rule for triggering sending of the transmission assistance information may also be predefined, or configured by high-level signaling, or indicated by dynamic signaling. Optionally, the preset rule is used for configuring a data volume threshold or a data packet number threshold for the target logical channel or logical channel group. In a case that a data volume-to-be-transmitted in a corresponding buffer is equal to or exceeds the data volume threshold, or the number of data packets-to-be-transmitted in the corresponding buffer is equal to or exceeds the data packet number threshold, the first communications device reports the transmission assistance information for the logical channel or logical channel group. Alternatively, the preset rule is used for configuring a remaining time threshold for the target logical channel or logical channel group. In a case that remaining time of data-to-be-transmitted in the corresponding buffer is equal to or less than the threshold (for example, judging based on remaining time of an earliest data packet in the buffer), the first communications device reports the transmission assistance information for the logical channel or logical channel group. Alternatively, in a case that the first communications device has reported statistical information of data groups for the target logical channel or logical channel group, and in a case that it is detected that the statistical information on the side of the first communications device has changed or the magnitude of change exceeds a specified or pre-configured threshold, the first communications device reports the transmission assistance information for the logical channel or logical channel group. For example, in a case that an average value or a maximum value of data volumes of the data groups corresponding to logical channel 1 exceeds the pre-configured threshold, the first communications device reports the changed statistical information of the data volumes of the data groups for the logical channel, and the second communications device may update configured grant (Configured Grant, CG) related configurations, etc. based on the information.

For a BSR-based triggering manner of the transmission assistance information, on the one hand, an existing BSR triggering rule may be followed, and on the other hand, a BSR-based trigger includes at least one of the following:
in a case of triggering a Periodic BSR, triggering an SR to request a target resource from the second communications device; and
in a case that a new data group arrives, triggering a Regular BSR to request the target resource from the second communications device;
where the target resource is used for sending the transmission assistance information.

In other words, for the target logical channel or logical channel group, the Periodic BSR may also trigger the SR, thereby using the SR to request the target resource from the second communications device to send the transmission assistance information.

Or, for the target logical channel or logical channel group, in a case that the new data group arrives, the Regular BSR is triggered, thereby using the Regular BSR to request the target resource from the second communications device to send the transmission assistance information. At this time, triggering of the Regular BSR is not limited to an additional condition. In a case that data-to-be-transmitted has existed in the target logical channel or logical channel group, the newly arrived data group may also trigger the Regular BSR.

After receiving the transmission assistance information of first data, the second communications device executes corresponding transmission processing.

Optionally, the transmission processing includes at least one of the following:
data scheduling;
configuring or updating transmission resources; and
indicating a first communications device to discard the first data.

In a case of scheduling decision of the second communications device, scheduling is performed in combination with the received transmission assistance information. In a case that the second communications device configures or updates the transmission resources, such as CG and other parameters, configuring or updating is performed in combination with the received transmission assistance information. The second communications device indicates discarding part or all of the data packets in the first logical channel/logical channel group in combination with the received transmission assistance information.

For example, based on the transmission assistance information of the first data in the buffer sent by the first communications device, the second communications device indicates a UE to discard data packets of one or more data groups corresponding to a certain logical channel or logical channel group.

It is known from the above-mentioned content that in the embodiment, the first communications device may voluntarily discard the first data based on the transmission configuration information of the second communications device. Optionally, the first communications device may receive the transmission configuration information of the second communications device.

Optionally, the transmission configuration information includes at least one of the following:
a channel quality threshold; and
a transmission remaining time threshold.

As such, for the pre-configured channel quality threshold and packet discarding operation of the second communications device, in a case that it is detected by the first communications device that the channel quality of a serving cell is lower than the channel quality threshold, data corresponding to logical channels or logical channel groups having a priority lower than a pre-configured priority value. In a case that the channel quality is not lower than the channel quality threshold, normal data transmission is restored, and discarding is no longer performed.

For the pre-configured transmission remaining time threshold of the second communications device, in a case that it is detected by the first communications device that transmission remaining time of a certain data packet-to-be-transmitted (which may be understood as a time length of the data packet still being able to be transmitted before the data packet times out, that is, the transmission remaining time may be determined based on a current moment and a timeout time of the data packet) is shorter than the pre-configured transmission remaining time threshold, the data packet-to-be-transmitted may be discarded.

For discarded data, information corresponding to data that has been discarded or is to be discarded is not reflected in the transmission assistance information of the first data in the buffer reported by the first communications device. That is, in a case of reporting the information, it is assumed that the data does not exist.

It can be understood that multimedia data such as videos, audio, etc. as a main part of XR service data is generally configured to be transmitted in an unacknowledged mode (Unacknowledged Mode, UM). Thus, potential sequence number gaps (Sequence Number Gap, SN Gap) caused by packet discarding may be processed by a related technology without introducing additional processing.

An execution subject of the transmission processing method provided by this embodiment of this application may be a transmission processing apparatus or a control module in the transmission processing apparatus for executing a loading method. In the embodiments of this application, the transmission processing apparatus executing the loading transmission processing method is taken as an example to illustrate the method provided by this embodiment of this application.

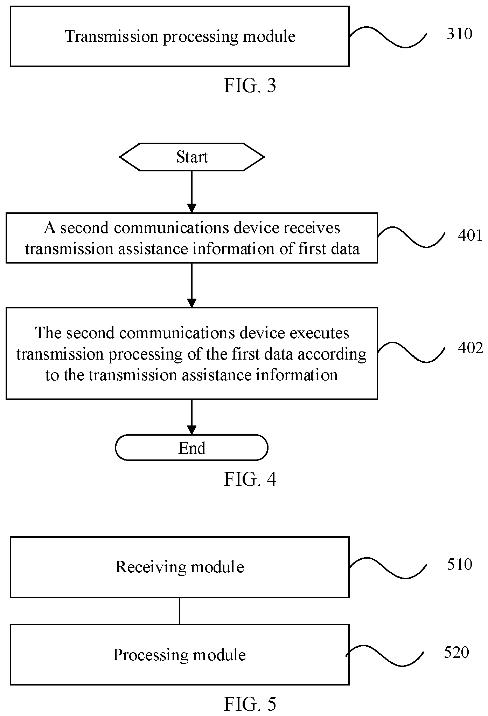

As shown in FIG. 3, a transmission processing apparatus according to an embodiment of this application includes:
a transmission processing module 310, configured to send transmission assistance information of first data, the transmission assistance information being used for assisting a second communications device to execute transmission processing of the first data; or
discard the first data according to transmission configuration information.

Optionally, the first data is data corresponding to a first logical channel or logical channel group.

Optionally, the first data is grouped based on at least one of the following parameters:
logical channels or logical channel groups;
arrival time intervals between data;
time threshold values;
a number of groups; and
data packets.

Optionally, the transmission processing module is further configured to:
send first information of each group of data among at least one group of data.

Optionally, the first information includes at least one of the following:
a data volume-to-be-transmitted;
transmission waiting time;
transmission arrival time;
transmission timeout time;
transmission remaining time;
an association relationship with other data groups among the at least one group of data; and
grouping parameters.

Optionally, the transmission waiting time includes at least one of the following:
transmission waiting time of a target data packet corresponding to a current data group;
average transmission waiting time of at least two data packets corresponding to the current data group;
a transmission waiting time variance of the at least two data packets corresponding to the current data group;
a transmission waiting time standard deviation of the at least two data packets corresponding to the current data group; and
a transmission waiting time fluctuation range of the at least two data packets corresponding to the current data group range.

Optionally, the transmission arrival time includes at least one of the following:
transmission arrival time of a target data packet corresponding to a current data group;
average transmission arrival time of at least two data packets corresponding to the current data group;
a transmission arrival time variance of the at least two data packets corresponding to the current data group;
a transmission arrival time standard deviation of the at least two data packets corresponding to the current data group; and
a transmission arrival time fluctuation range of the at least two data packets corresponding to the current data group range.

Optionally, the association relationship with the other data groups among the at least one group of data includes at least one of the following:
identical processing;
a transmission substitution; and
synchronization requirement.

Optionally, the transmission processing module is further configured to:
send statistical information of the at least one group of data.

Optionally, the statistical information includes at least one of the following:
data volume statistical information; and
time statistical information.

Optionally, the time statistical information includes at least one of the following:
statistical information of transmission waiting time;
statistical information of transmission remaining time;
an arrival period;
an arrival offset; and
arrival time jitter information.

Optionally, the transmission processing module is further configured for one of the following:
sending the transmission assistance information based on a preset period;
after receiving a transmission indication sent by the second communications device, sending the transmission assistance information according to the transmission indication;
based on a preset rule, sending the transmission assistance information under a condition of meeting the preset rule; and
based on a trigger of a buffer status report (BSR), sending the transmission assistance information in a case of the trigger.

Optionally, a BSR-based trigger includes at least one of the following:
in a case of triggering a Periodic BSR, triggering an SR to request a target resource from the second communications device; and
in a case that a new data group arrives, triggering a Regular BSR to request the target resource from the second communications device;
where the target resource is used for sending the transmission assistance information.

Optionally, the transmission configuration information includes at least one of the following:
a channel quality threshold; and
a transmission remaining time threshold.

The apparatus may send the transmission assistance information of the first data, so that after acquiring the transmission assistance information, the second communications device timely synchronizes related information of the first data and executes corresponding transmission processing; or may voluntarily discard all or part of the first data according to transmission configuration information. Here, the first data may be understood as data that needs to be transmitted from the first communications device to the second communications device. As such, through timely transmission processing by the second communications device or autonomous packet discarding by the first communications device, more efficient data transmission is realized.

The transmission processing apparatus in the embodiments of this application may be an apparatus, may be an apparatus or an electronic device provided with an operating system, and may also be a component, an integrated circuit or a chip in the first communications device. The apparatus or the electronic device may be a mobile terminal, and may also be a non-mobile terminal. As an example, the mobile terminal includes, but is not limited to, the types of the terminal 11 enumerated above. The non-mobile terminal may be a server, a network attached storage (Network Attached Storage, NAS), a personal computer (Personal Computer, PC), a television (television, TV), a teller machine, a self-service machine, etc., which is not specifically limited in the embodiments of this application.

The transmission processing apparatus provided in the embodiments of this application may implement various processes implemented by the first communications device in the method embodiment of FIG. 2. To avoid repetition, details will not be described herein.

As shown in FIG. 4, a transmission processing method according to an embodiment of this application includes the following steps:
step 401, receive, by a second communications device, transmission assistance information of first data; and
step 402, execute, by the second communications device, transmission processing of the first data according to the transmission assistance information.

According to the above-mentioned steps, the second communications device receives the transmission assistance information of the first data to timely synchronize related information of the first data and execute corresponding transmission processing, thereby realizing more efficient data transmission. Here, the first data may be understood as data that needs to be transmitted from the first communications device to the second communications device.

Specific implementation of the transmission assistance information and transmission implementation are as implementation in the foregoing embodiments of the transmission processing method executed by the first communications device, which will not be described in detail.

Optionally, the transmission processing includes at least one of the following:
data scheduling;
configuring or updating transmission resources; and
indicating a first communications device to discard the first data.

The method is implemented in conjunction with the above-mentioned transmission processing method executed by the first communications device. The implementation way of the foregoing embodiments of the transmission processing method executed by the first communications device is applicable to the method, and may also achieve the same technical effects.

As shown in FIG. 5, a transmission processing apparatus according to an embodiment of this application includes:
a receiving module 510, configured to receive transmission assistance information of first data; and
a processing module 520, configured to execute transmission processing of the first data according to the transmission assistance information.

Optionally, the transmission processing includes at least one of the following:
data scheduling;
configuring or updating transmission resources; and
indicating a first communications device to discard the first data.

The apparatus receives the transmission assistance information of the first data to timely synchronize related information of the first data and execute corresponding transmission processing, thereby realizing more efficient data transmission. Here, the first data may be understood as data that needs to be transmitted from the first communications device to the second communications device.

The transmission processing apparatus provided by this embodiment of this application may implement various processes implemented by the second communications device in the method embodiment of FIG. 4. To avoid repetition, details will not be described herein.

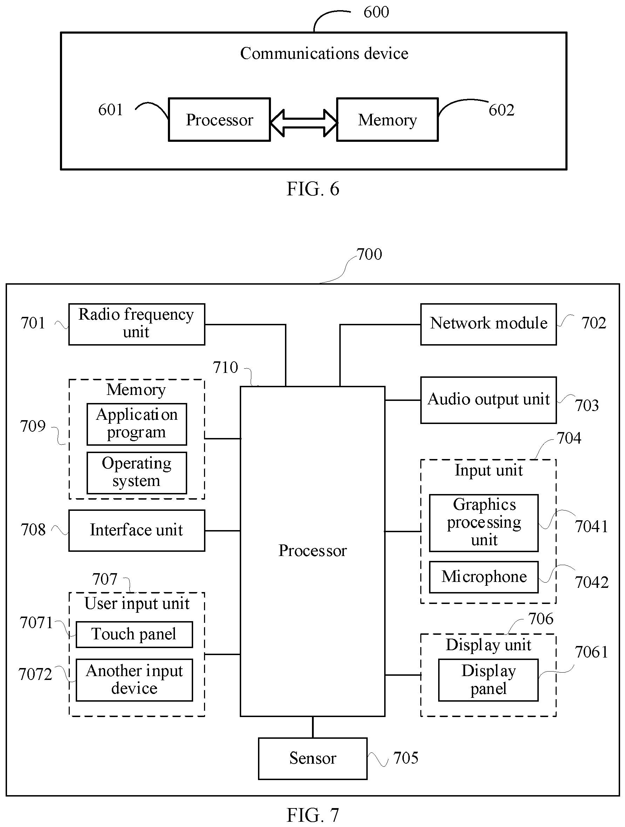

Optionally, as shown in FIG. 6, further provided in an embodiment of this application is a communications device, including a processor 601, a memory 602, and a program or an instruction stored in the memory 602 and executable on the processor 601. For example, in a case that the communications device 600 is the first communications device, when the program or the instruction is executed by the processor 601, various processes of the foregoing embodiments of the transmission processing method executed by the first communications device are implemented, and the same technical effects may be achieved. In a case that the communications device 600 is the second communications device, when the program or the instruction is executed by the processor 601, various processes of the foregoing embodiments of the transmission processing method executed by the second communications device are implemented, and the same technical effects may be achieved, and the same technical effects may be achieved. To avoid repetition, details will not be described herein.

Further provided in an embodiment of this application is a communications device, including a processor and a communications interface, the communications interface being configured to send transmission assistance information of first data, and the transmission assistance information being used for assisting a second communications device to execute transmission processing of the first data; and the processor being configured to discard the first data according to transmission configuration information. The embodiment of the communications device corresponds to the foregoing method embodiment of the first communications device. Both the implementation steps and the implementation ways of the foregoing method embodiments are applicable to the embodiment of the communications device, and the same technical effects may be achieved. Specifically, FIG. 7 is a schematic diagram of a hardware structure of a first communications device, for example, a terminal, for implementing the embodiments of this application.

The terminal 700 includes, but is not limited to: at least part of components such as a radio frequency unit 701, a network module 702, an audio output unit 703, an input unit 704, a sensor 705, a display unit 706, a user input unit 707, an interface unit 708, a memory 709, a processor 710, etc.

It can be understood by those skilled in the art that the terminal 700 may further include a power supply (such as a battery) for supplying power to the components. The power supply may be logically connected to the processor 710 through a power management system, thereby implementing functions such as charging, discharging, and power consumption management through the power management system. A terminal structure shown in FIG. 7 constitutes no limitation on the terminal, and the terminal may include more or fewer components than those shown in the figure, or some components may be combined, or a different component deployment may be used. Details will not be described herein.

It is to be understood that in the embodiments of this application, the input unit 704 may include a graphics processing unit (Graphics Processing Unit, GPU) 7041 and a microphone 7042. The graphics processing unit 7041 processes image data of a static picture or a video that is obtained by an image acquisition device (e.g. a camera) in a video acquisition mode or an image acquisition mode. The display unit 706 may include a display panel 7061. The display panel 7061 may be configured in the form of a liquid crystal display, an organic light-emitting diode, or the like. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (such as a volume control key, a switch key, etc.), a track ball, a mouse, and a joystick, which will not be described in detail herein.

In the embodiments of this application, after receiving downlink data from a second communications device, the radio frequency unit 701 sends the downlink data to the processor 710 for processing. In addition, uplink data is sent to the second communications device. Generally, the radio frequency unit 701 includes, but is not limited to, an antenna, at least one amplifier, a transceiver, a coupler, a low noise amplifier, a duplexer, and the like.

The memory 709 may be configured to store a software program or an instruction and various data. The memory 709 may mainly include a program or an instruction storage area and a data storage area. The program or instruction storage area may store an operating system, an application program or instruction required by at least one function (such as a sound playback function, an image display function, etc.), and the like. Additionally, the memory 709 may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory is for example at least one magnetic disk storage device, a flash memory or another volatile solid-state storage device.

The processor 710 may include one or more processing units. Optionally, the processor 710 may integrate an application processor and a modem processor, where the application processor mainly processes an operating system, a user interface, an application program or an instruction, etc., and the modem processor mainly processes wireless communication, such as a baseband processor. It can be understood that the above-mentioned modem processor may not be integrated into the processor 710.

The radio frequency unit 701 sends transmission assistance information of first data, the transmission assistance information being used for assisting a second communications device to execute transmission processing of the first data;
the processor 710 is configured to discard the first data according to transmission configuration information.

The terminal may send the transmission assistance information of the first data, so that after acquiring the transmission assistance information, the second communications device timely synchronizes related information of the first data and executes corresponding transmission processing; or the first communications device may voluntarily discard all or part of the first data according to the transmission configuration information. Here, the first data may be understood as data that needs to be transmitted from the first communications device to the second communications device. As such, through timely transmission processing by the second communications device or autonomous packet discarding by the first communications device, more efficient data transmission is realized.

Optionally, the radio frequency unit 701 is further configured to send first information of each group of data among at least one group of data.

Optionally, the radio frequency unit 701 is further configured to send statistical information of the at least one group of data, where
the statistical information includes at least one of the following:
data volume statistical information; and
time statistical information.

Optionally, the radio frequency unit 701 is further configured for one of the following:
sending the transmission assistance information based on a preset period;
after receiving a transmission indication sent by the second communications device, sending the transmission assistance information according to the transmission indication;
based on a preset rule, sending the transmission assistance information under a condition of meeting the preset rule; and
based on a trigger of a buffer status report (BSR), sending the transmission assistance information in a case of the trigger.

Further provided in an embodiment of this application is a communications device, including a processor and a communications interface, the communications interface being configured to receive transmission assistance information of first data; and the processor being configured to execute transmission processing of the first data according to the transmission assistance information. The embodiment of the communications device corresponds to the foregoing method embodiment of the second communications device. Both the implementation steps and the implementation ways of the foregoing method embodiments are applicable to the embodiment of the communications device, and the same technical effects may be achieved.

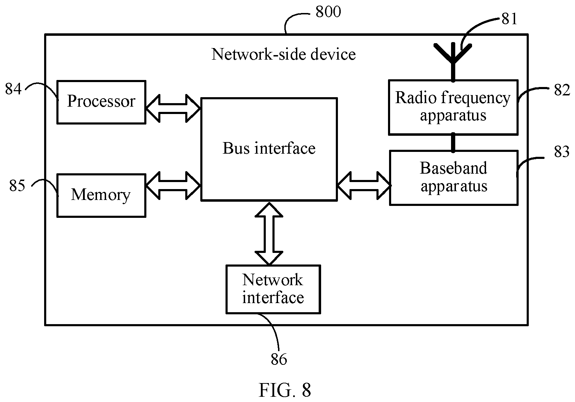

Specifically, further provided in an embodiment of this application is a communications device. As shown in FIG. 8, the communications device, for example, a network-side device 800, includes: an antenna 81, a radio frequency apparatus 82 and a baseband apparatus 83. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes and sends information-to-be-sent to the radio frequency apparatus 82, and the radio frequency apparatus 82 processes the received information and sends it out through the antenna 81.

The above-mentioned radio frequency apparatus may be located in the baseband apparatus 83. The method executed by the second communications device in the foregoing embodiments may be implemented in the baseband apparatus 83. The baseband apparatus 83 may include a processor 84 and a memory 85.

The baseband apparatus 83 may for example include at least one baseband plate on which a plurality of chips is provided. As shown in FIG. 8, one of the chips is for example a processor 84 which is connected to a memory 85 to call a program stored in the memory 85 to execute a network device operation shown in the foregoing method embodiments.

The baseband apparatus 83 may further include a network interface 86 for information interaction with a radio frequency apparatus 82. The interface is for example a common public radio interface (common public radio interface, CPRI).

Specifically, according to the embodiments of the present invention, the network-side device further includes: an instruction or a program stored in the memory 85 and executable on the processor 84. The processor 84 invokes the instruction or program in the memory 85 to execute the method executed by the modules shown in FIG. 5, and the same technical effects are achieved. To avoid repetition, details will not be described herein.

Further provided in an embodiment of this application is a readable storage medium, storing a program or an instruction, the program or the instruction, when executed by a processor, implementing various processes of the foregoing embodiments of the transmission processing method executed by the first communications device or the second communications device, and the same technical effects may be achieved. To avoid repetition, details will not be described herein.

The processor is a processor in the communications devices in the foregoing embodiments. The readable storage medium may include a computer-readable storage medium, such as a computer read-only memory (Read-Only Memory, ROM), a random access memory (Random Access Memory, RAM), a magnetic disk, an optical disc, etc.

Additionally provided in an embodiment of this application is a chip, including a processor and a communications interface, the communications interface being coupled to the processor, and the processor being configured to execute a program or an instruction to implement various processes of the foregoing embodiments of the transmission processing method executed by the first communications device or the second communications device, and the same technical effects may be achieved. To avoid repetition, details will not be described herein.

It is to be understood that the chip mentioned in the embodiments of this application may further be referred to as a system-on-chip, a system chip, a chip system, a system-on-a-chip, etc.

Further provided in an embodiment of this application is a communications device, configured to implement various processes of the embodiments of the foregoing method, and the same technical effects may be achieved. To avoid repetition, details will not be described herein.

In the context, terms "include", "comprise", or any other variation thereof are intended to cover a non-exclusive inclusion, so that processes, methods, objects or apparatuses including a series of elements include not only those elements, but also other elements that are not expressly enumerated, or that are inherent to such processes, methods, objects or apparatuses. Without more limitations, elements defined by the sentence "including a ..." do not exclude that there are still other same elements in the processes, methods, objects or apparatuses including the elements. In addition, it is to be pointed out that the scope of the methods and apparatuses in the implementations of this application is not limited to performing functions in an order shown or discussed, but may also include performing the functions in a substantially simultaneous manner or in a reverse order according to the functions involved. For example, the described methods may be performed in a sequence different from those described, and various steps may further be added, omitted, or combined. In addition, features described with reference to certain examples may be combined in other examples.

Through descriptions of the foregoing implementations, those skilled in the art may clearly learn that the methods according to the foregoing embodiments may be implemented by relying on software and a commodity hardware platform or by using hardware. However, in many cases, the former is the preferred implementation. Based on such an understanding, the technical solutions of this application essentially, or the part contributing to the related art, may be presented in the form of a computer software product. The computer software product is stored in a storage medium (for example, a ROM/RAM, a magnetic disk, an optical disc) including several instructions to enable a terminal (which may be a mobile phone, a computer, a server, an air conditioner, a network device, etc.) to perform the methods described in the embodiments of this application.

The embodiments of this application are described above in conjunction with the accompanying drawings. However, this application is not limited to the above-mentioned specific implementations, and the above-mentioned specific implementations are merely illustrative and not limitative. Those of ordinary skill in the art may further make various variations under the inspiration of this application without departing from the spirit of this application and the protection scope of the claims, and such variations shall all fall within the protection scope of this application.

## Claims

1. A transmission processing method, comprising:
sending, by a first communications device, transmission assistance information of first data, the transmission assistance information being used for assisting a second communications device to execute transmission processing of the first data; or
discarding the first data according to transmission configuration information.

2. The method according to claim 1, wherein the first data is grouped based on at least one of the following parameters:
logical channels or logical channel groups;
arrival time intervals between data;
time threshold values;
a number of groups; and
data packets.

3. The method according to claim 2, wherein the sending, by a first communications device, transmission assistance information of first data comprises:
sending, by the first communications device, first information of each group of data among at least one group of data.

4. The method according to claim 3, wherein the first information comprises at least one of the following:
a data volume-to-be-transmitted;
transmission waiting time;
transmission arrival time;
transmission timeout time;
transmission remaining time;
an association relationship with other data groups among the at least one group of data; and grouping parameters.

5. The method according to claim 4, wherein the transmission waiting time comprises at least one of the following:
transmission waiting time of a target data packet corresponding to a current data group;
average transmission waiting time of at least two data packets corresponding to the current data group;
a transmission waiting time variance of the at least two data packets corresponding to the current data group;
a transmission waiting time standard deviation of the at least two data packets corresponding to the current data group; and
a transmission waiting time fluctuation range of the at least two data packets corresponding to the current data group range.

6. The method according to claim 4, wherein the transmission arrival time comprises at least one of the following:
transmission arrival time of a target data packet corresponding to a current data group;
average transmission arrival time of at least two data packets corresponding to the current data group;
a transmission arrival time variance of the at least two data packets corresponding to the current data group;
a transmission arrival time standard deviation of the at least two data packets corresponding to the current data group; and
a transmission arrival time fluctuation range of the at least two data packets corresponding to the current data group range.

7. The method according to claim 4, wherein the association relationship with the other data groups among the at least one group of data comprises at least one of the following:
identical processing;
transmission substitution; and
synchronization requirement.

8. The method according to claim 2 or 3, wherein the sending, by a first communications device, transmission assistance information of first data comprises:
sending, by the first communications device, statistical information of the at least one group of data, wherein
the statistical information comprises at least one of the following:
data volume statistical information; and
time statistical information.

9. The method according to claim 8, wherein the time statistical information comprises at least one of the following:
statistical information of transmission waiting time;
statistical information of transmission remaining time;
an arrival period;
an arrival offset; and
arrival time jitter information.

10. The method according to claim 1, wherein the sending, by a first communications device, transmission assistance information of first data comprises one of the following:
sending, by the first communications device, the transmission assistance information based on a preset period;
after receiving, by the first communications device, a transmission indication sent by the second communications device, sending the transmission assistance information according to the transmission indication;
based on a preset rule, sending, by the first communications device, the transmission assistance information under a condition of meeting the preset rule; and
based on a trigger of a buffer status report BSR, sending, by the first communications device, the transmission assistance information in a case of the trigger.

11. The method according to claim 10, wherein a BSR-based trigger comprises at least one of the following:
in a case of triggering a periodic BSR, triggering an SR to request a target resource from the second communications device; and
in a case that a new data group arrives, triggering a regular BSR to request the target resource from the second communications device;
wherein the target resource is used for sending the transmission assistance information.

12. The method according to claim 1, wherein the transmission configuration information comprises at least one of the following:
a channel quality threshold; and
a transmission remaining time threshold.

13. A transmission processing method, comprising:
receiving, by a second communications device, transmission assistance information of first data; and
executing, by the second communications device, transmission processing of the first data according to the transmission assistance information.

14. The method according to claim 13, wherein the transmission processing comprises at least one of the following:
data scheduling;
configuring or updating transmission resources; and
indicating a first communications device to discard the first data.

15. A transmission processing apparatus, comprising:
a transmission processing module, configured to send transmission assistance information of first data, the transmission assistance information being used for assisting a second communications device to execute transmission processing of the first data; or
discard the first data according to transmission configuration information.

16. The apparatus according to claim 15, wherein the first data is data corresponding to a first logical channel or logical channel group.

17. The apparatus according to claim 15, wherein the first data is grouped based on at least one of the following parameters:
logical channels or logical channel groups;
arrival time intervals between data;
time threshold values;
a number of groups; and
data packets.

18. The apparatus according to claim 17, wherein the transmission processing module is further configured to:
send first information of each group of data among at least one group of data.

19. The apparatus according to claim 18, wherein the first information comprises at least one of the following:
a data volume-to-be-transmitted;
transmission waiting time;
transmission arrival time;
transmission timeout time;
transmission remaining time;
an association relationship with other data groups among the at least one group of data; and grouping parameters.

20. The apparatus according to claim 19, wherein the transmission waiting time comprises at least one of the following:
transmission waiting time of a target data packet corresponding to a current data group;
average transmission waiting time of at least two data packets corresponding to the current data group;
a transmission waiting time variance of the at least two data packets corresponding to the current data group;
a transmission waiting time standard deviation of the at least two data packets corresponding to the current data group; and
a transmission waiting time fluctuation range of the at least two data packets corresponding to the current data group range.

21. The apparatus according to claim 19, wherein the transmission arrival time comprises at least one of the following:
transmission arrival time of a target data packet corresponding to a current data group;
average transmission arrival time of at least two data packets corresponding to the current data group;
a transmission arrival time variance of the at least two data packets corresponding to the current data group;
a transmission arrival time standard deviation of the at least two data packets corresponding to the current data group; and
a transmission arrival time fluctuation range of the at least two data packets corresponding to the current data group range.

22. The apparatus according to claim 19, wherein the association relationship with the other data groups among the at least one group of data comprises at least one of the following:
identical processing;
transmission substitution; and
synchronization requirement.

23. The apparatus according to claim 17 or 18, wherein the transmission processing module is further configured to:
send statistical information of the at least one group of data, wherein
the statistical information comprises at least one of the following:
data volume statistical information; and
time statistical information.

24. The apparatus according to claim 23, wherein the time statistical information comprises at least one of the following:
statistical information of transmission waiting time;
statistical information of transmission remaining time;
an arrival period;
an arrival offset; and
arrival time jitter information.

25. The apparatus according to claim 15, wherein the transmission processing module is further configured for one of the following:
sending the transmission assistance information based on a preset period;
after receiving a transmission indication sent by the second communications device, sending the transmission assistance information according to the transmission indication;
based on a preset rule, sending the transmission assistance information under a condition of meeting the preset rule; and
based on a trigger of a buffer status report, BSR, sending the transmission assistance information.

26. The apparatus according to claim 25, wherein a BSR-based trigger comprises at least one of the following:
in a case of triggering a Periodic BSR, triggering an SR to request a target resource from the second communications device; and
in a case that a new data group arrives, triggering a Regular BSR to request the target resource from the second communications device;
wherein the target resource is used for sending the transmission assistance information.

27. The apparatus according to claim 15, wherein the transmission configuration information comprises at least one of the following:
a channel quality threshold; and
a transmission remaining time threshold.

28. A transmission processing apparatus, comprising:
a receiving module, configured to receive transmission assistance information of first data; or
a processing module, configured to execute transmission processing of the first data according to the transmission assistance information.

29. The apparatus according to claim 28, wherein the transmission processing comprises at least one of the following:
data scheduling;
configuring or updating transmission resources; and
indicating a first communications device to discard the first data.

30. A communications device, comprising a processor, a memory, and a program or an instruction stored in the memory and executable on the processor, wherein when the program or the instruction is executed by the processor, steps of the transmission processing method according to any of claims 1-12, or steps of the transmission processing method according to claim 13 or 14 are implemented.

31. A readable storage medium, storing a program or an instruction, wherein when the program or the instruction is executed by a processor, steps of the transmission processing method according to any of claims 1-12, or steps of the transmission processing method according to claim 13 or 14 are implemented.

32. A chip, comprising a processor and a communications interface, the communications interface being coupled to the processor, and the processor being configured to execute a program or an instruction to implement steps of the transmission processing method according to any of claims 1-12, or implement steps of the transmission processing method according to claim 13 or 14.

33. A computer program product, stored in a storage medium, the computer program product being executed by at least one processor to implement steps of the transmission processing method according to any of claims 1-12, or implement steps of the transmission processing method according to claim 13 or 14.

34. A communications device, configured to execute steps of the transmission processing method according to any of claims 1-12, or configured to execute steps of the transmission processing method according to claim 13 or 14.
